# EUROPEAN PATENT APPLICATION

(11) **EP 1 298 919 A2**
(43) Date of publication of application: **02.04.2003**
(21) Application number: 02020163.8
(22) Date of filing: 09.09.2002
(51) Int. Cl.: H04N 5/00

(54) **Television system**

(30) Priority: 13.09.2001 GB 0122189
(71) Applicant: Pace Micro Technology PLC, Saltaire, Shipley, BD18 3LF (GB)
(72) Inventor: Wood, Simon, Balldon, Shipley BD17 6HN (GB)
(74) Representative: Wood, Graham

(57) **Abstract**

A television system (2) is provided of the type including a broadcast data receiver (BDR) (4) for receiving data transmitted from a broadcaster at a remote location via cable, satellite and/or terrestrial broadcast systems. The BDR (4) decodes and processes the data to provide video, audio and/or auxiliary data for display on a display screen (6), listening to via speakers and/or for storage in the hard disk drive of the BDR (4) for subsequent display/listening at some time in the future. One or more points of reference can be labelled in incoming data and/or stored data in the BDR (4), such that on selection of a reference function in the BDR by the user using remote control means (10), the one or more reference points of data are assembled in sequence for display on the display screen (6) and/or listening to via the speakers.

## Description

This invention relates to a television system, and particularly to a television system incorporating a broadcast data receiver, often referred to as a set top box.

The television system described herein typically includes a display screen connected to or integrally formed with a broadcast data receiver (BDR). The BDR receives digital data from a broadcaster at a remote location and decodes and processes the data to provide video, audio and/or auxiliary data for display on the display screen or for listening via speakers. The BDR has storage means, typically in the form of a hard disk drive, and data sent from the broadcaster can be stored for a period of time on the hard disk space prior to being shown at the allocated time on the display screen. In addition, television programmes which have been recorded by the user can be stored on the hard disk drive of the BDR.

It is often the case that a user does not have sufficient time to watch an entire television programme but would still like to view the interesting or main points of the programme. This is particularly the case when the programme contains, for example, a number of commercial breaks which the user may not be interested in. At the present time, if a user has only time to watch the highlights of a particular programme, the user is required to record the programme and then fast forward to the portions of data which are of interest to them. The user typically fast forwards through the programme using control means, such as a remote control handset. This process can be time consuming for the user, the user may accidentally fast forward past portions of data which are of interest to them and also the resulting viewing is likely to be intermittent and broken.

It is not possible at the present time for a user of a television system to select to view highlights of events which have occurred in a previous live or recorded event, unless the broadcaster utilises an editing service and transmits all of the data for the highlight package.

It is therefore an aim of the present invention to provide a television system which overcomes the abovementioned problems.

According to a first aspect of the present invention there is provided a television system, said television system including a broadcast data receiver (BDR) for receiving data transmitted from a broadcaster at a remote location via cable, satellite and/or terrestrial means, said BDR decoding and processing said data to provide video, audio and/or auxiliary data for display on a display screen, listening via speakers and/or for storage in memory means for subsequent display/listening at some time in the future, and characterised in that means are provided to allow one or more points of reference in the incoming data and/or stored data to be labelled, such that on selection of an appropriate function of the BDR by the user using control means, the one or more reference points of data are assembled in sequence for display on said display screen and/or listening to via speakers.

Preferably the data which is not labelled by one or more reference points is omitted when the referenced data is assembled in sequence.

Further preferably the data when assembled in sequence is provided as a substantially continuous string of data.

In one embodiment the one or more reference points are provided in pairs, separated in time in said incoming and/or stored data, such that on selection of an appropriate reference function by the user, the data between spaced reference points are assembled into a substantially continuous string of data, with the portion or portions of data which are not between the pairs of reference points being omitted.

Typically, the first reference point in a pair indicates to the BDR the start of the portion of data for assembly into a part or whole of the sequence, and the second reference point of the pair indicates to the BDR the end of the portion of data for assembly into a part of whole of the sequence.

In an alternative embodiment, each reference point in the data includes identification means for the start and end points of the data for assembly into a whole or part of the sequence. Thus, in this embodiment only one reference point is required for a portion of data from a data stream to be labelled.

Preferably each reference point or pair of reference points relates to a portion of data from a data stream relating to a part of one or more television programmes. Furthermore, the reference point(s) typically relates to data within one or more television programmes.

Preferably the one or more reference points are highlights of a particular television programme. For example, the highlights may include the goals scored in a football match, the headlines of the news and/or the like. Thus, the reference points are provided in the data to mark highlights of a particular programme, such that when the reference points are assembled in sequence, only data relating to the highlights is provided for display, listening to and/or storage in the BDR or on other recording medium (i.e., video tape or, DVD).

In one embodiment, when the reference points and thus the data relating thereto is assembled in sequence by the BDR, the sequence is the chronological order in which the data and reference points appear in the original incoming or recorded data stream.

In an alternative embodiment, when the reference points and the data relating thereto is assembled in sequence by the BDR, the sequence is the chronological order in which the data and reference points appear in the original incoming or recorded data stream in relation to particular subject matter. Thus, in this embodiment, portions of referenced data relating to similar events can be assembled in chronological sequence together, and then non-similar or different sequences of events are sequenced together. For example, in a sporting programme such as "Grandstand" which shows a plurality of sporting events and which may flick between the display of two or more events occurring simultaneously during the programme, all the reference points relating to i.e., horse riding may be assembled in sequence according to chronological order as a first group and all the reference points relating to i.e., football may be assembled in sequence according to chronological order as a second group, irrespective of whether the first or second groups are in chronological order.

Preferably the one or more reference points are added to the data stream following the recording of a live event, thereby retrospectively referencing previously recorded material.

In one embodiment the one or more reference points are added to the data stream to indicate highlights of a particular programme at the broadcaster end prior to transmission of the data to the BDR. The user than has the option of assembling the reference points provided by the broadcaster at or following the scheduled viewing time for the programme or event to which the referenced data relates.

In a further embodiment an indication of the reference points relating to a particular data stream are sent after transmission of the data stream, such that when the particular data stream is selected for watching or listening thereto using a highlight mode selected by the user, the reference points are compared to the stored data stream and any data matching the reference points is assembled in sequence and displayed to the user.

In an alternative embodiment the one or more reference points can be added to the data by a user using control means, such as a remote control handset, when the data is being displayed on the display screen or is being listening to via speakers. Thus for example, a user can add reference points to a television programme being recorded, so that they or another user can watch the referenced points at a later date, without having to watch the intervening non-referenced data.

Preferably the memory means of the BDR is in the form of a hard disk drive connected to or forming a part thereof.

Preferably the user selects to watch an assembled sequence of referenced points relating to an event or programme by selection of a reference mode or option using control means, such as a pre-designated button of a remote control handset, or via an options menu displayed on the display screen. The user, in addition, typically selects the programme or event for which the referenced data relates thereto using the control means.

According to a second aspect of the present invention there is provided a method of referencing portions of data in one or more television programmes using a television system, said television system including a BDR for receiving data transmitted from a broadcaster at a remote location via cable, satellite and/or terrestrial means, said data relating to one or more television programmes and/or channels, said BDR decoding and processing said data to provide video, audio and/or auxiliary data for display on a display screen, listening via speakers and/or for storage in memory means for subsequent display/listening at some time in the future, and wherein said method includes the steps of said broadcaster and/or user reviewing one or more television programmes and including reference points at one or more points in said programme(s), said one or more reference points being stored in memory means of said BDR and, on subsequent user selection of a reference option, the reference points in said programme(s) are assembled in sequence and displayed on said display screen and/or for listening via said speakers.

Thus the present invention provides a means of watching, recording and/or storing highlights of one or more television programmes or events, such that the highlights can be assembled and played consecutively without the intervening non-referenced data being displayed. The user therefore does not have to sit and listen to portions of the television programme which do not interest them, such as commercial breaks, interviews and/or the like.

An embodiment of the present invention will now be described with reference to the following figures, wherein:
Figure 1 is an example of the present invention in use; and
Figures 2a-2c are schematic diagrams illustrating the indexing of data and the assembly of the indexed data in a required sequence.

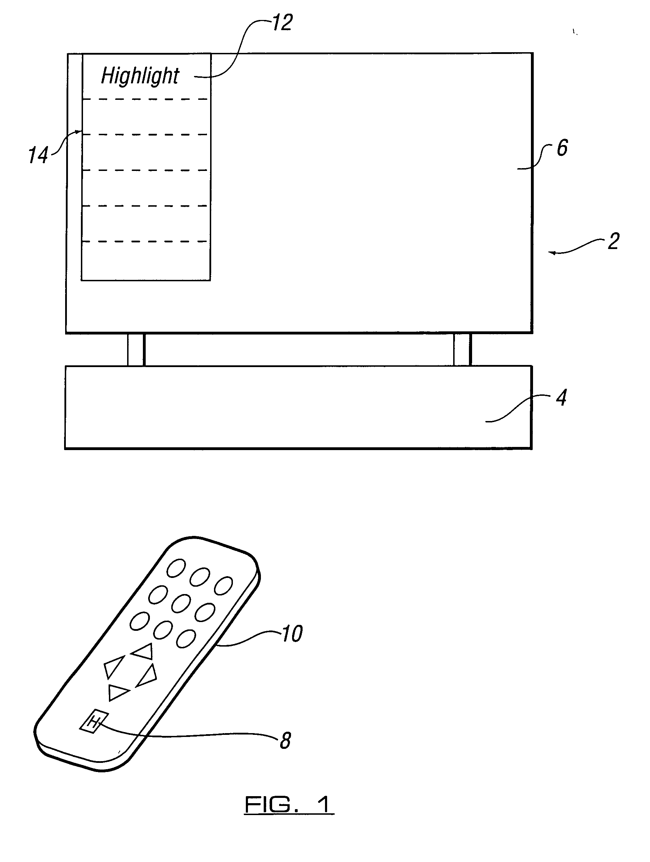

Referring to figure 1, there is illustrated a television system 2, which includes a broadcast data receiver (BDR) 4 and a television display screen 6. The BDR 4 is provided with storage means in the form of a hard disk drive. The BDR is also provided with processing means for decoding and processing digital data received from a broadcaster at a remote location via cable, satellite and/or terrestrial broadcast systems.

In the following described embodiment of the present invention, a live football match is transmitted from the broadcaster to the BDR and stored on the hard disk drive memory until the user selects to view the football match.

Meanwhile, the broadcaster reviews the live transmission and determines the highlights of the live event. The broadcaster inserts index marks with reference to certain points in the programme which they consider may be of interest to the user, for example, the points at which goals were scored in the football match. Thus, at or a short time before the points of the programme in which goals are scored in the football match, the broadcaster indexes these portions of data. These index reference points are then transmitted to the BDR and stored in a normal indexing system of the BDR.

If a user wishes to see the highlights of the football match, the user selects the highlight option button 8 on the remote control handset 10 used to operate the television/BDR and/or selects the highlight option 12 via an electronic programme guide display and/or drop down menu 14 displayed on the display screen. The BDR recognises that index points are stored for the selected stored programme and therefore matches the index points with the programme. The indexed portions of the programme are assembled in sequence for viewing, typically in the chronological order in which the reference points occur in the programme, with the non-indexed portions of the programme omitted.

It is possible that the viewer can also add their own index marks to a particular programme, in addition to or as an alternative to those provided by the broadcaster, such that when the viewer or some other user watches the programme again at a later date, they only need watch the indexed portions of data.

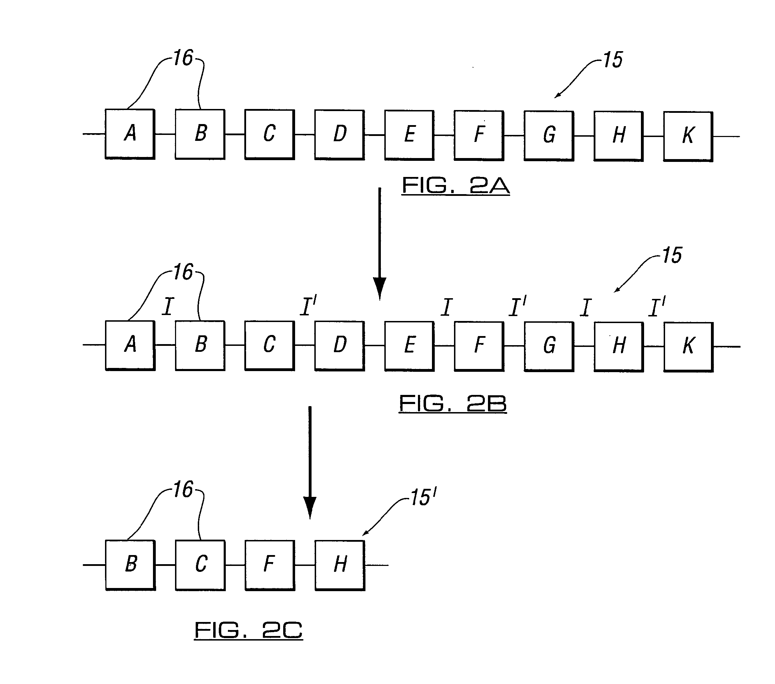

A more detailed description of the present invention is given below with reference to figures 2a-2c, wherein a data transport stream 15 is broadcast to a user's BDR. The data stream 15 comprises portions or bits of data 16, each portion of data 16 identified by a letter between A-K for the purposes of clarity. For example, the portions of data 16 can include a plurality of video frames. As the user watches the video data provided by the portions of data 16, the user indexes the parts of the data stream which are of interest to them. The user does this by depressing an appropriate button on the remote control handset 10. The beginning of the data which is of interest to them is identified by "I" in figure 2b following depression of an appropriate button on the remote control, and the end of the portion of data of interest to them is identified by "I"' in figure 2b following depression of an appropriate button on the remote control. Thus, in the example of figures 2a-2c, the user has indexed the portions of data labelled B, C, F and H.

When the user wishes to watch only the indexed portions of video data from the relevant transport stream such as, for example, following selection of an appropriate option in a display menu, the indexed portions of data are assembled in sequence, as shown in figure 2c. Non-indexed data portions identified by letters A, D, E, G and K are omitted from the assembled sequence. The assembled sequence of video data is then displayed to the user, thereby allowing the user to watch only the portions of video data in the transport stream which they have indicated as being of interest to them.

It will be appreciated by persons skilled in the art that the index points labelled "I" can contain sufficient information to identify the end points "I"' of that particular data portion of interest to the user or broadcaster, such that end index points "I"' are not required to be located in the data stream. For example, the index point "I" can contain information relating to the number of frames which are to be indexed from the first "I" frame. Alternatively, the index point "I" can contain information relating to time periods.

Thus the present invention provides a means of retrospectively adding index/reference points to a data stream, and storing said index points such that the data relating to the index points can be assembled in sequence and displayed to the user.

## Claims

1. A television system, said television system including a broadcast data receiver (BDR) (4) for receiving data transmitted from a broadcaster at a remote location via cable, satellite and/or terrestrial means, said BDR (4) decoding and processing said data to provide video, audio and/or auxiliary data for display on a display screen (6), listening via speakers and/or for storage in memory means for subsequent display/listening at some time in the future, and **characterised in that** means are provided to allow one or more points of reference in the incoming data and/or stored data to be labelled, such that on selection of an appropriate function of the BDR (4) by the user using control means, the one or more reference points of data are assembled in sequence for display on said display screen and/or listening to via speakers.

2. A television system according to claim 1 **characterised in that** the data which is not labelled by one or more reference points is omitted when said referenced data is assembled in sequence by the BDR (4).

3. A television system according to claim 1 **characterised in that** the data that is assembled in sequence is provided as a substantially continuous string of data.

4. A television system according to claim 1 **characterised in that** the one or more reference points are provided in pairs and are separated in time in the incoming and/or stored data.

5. A television system according to claim 4 **characterised in that** the first reference point of the pair indicates to the BDR (4) the start of the portion of data for assembly into a part or whole of the sequence.

6. A television system according to claim 4 **characterised in that** the second reference point of the pair indicates to the BDR (4) the end of the portion of data for assembly into a part or whole of the sequence.

7. A television system according to claim 1 **characterised in that** each reference point includes identification means for the start and end points of the data for assembly into a whole or part of the sequence.

8. A television system according to claim 1 **characterised in that** the one or more reference points relate to a portion of data from a data stream relating to one or more television programmes.

9. A television system according to claim 8 **characterised in that** the one or more reference points include data relating to the highlights of a particular television programme.

10. A television system according to claim 1 **characterised in that** the reference points and the data relating thereto are assembled in sequence by the BDR (4) in chronological order.

11. A television system according to claim 1 **characterised in that** where a data stream in which one or more reference points are provided therefor relates to one or more different types of subject matter, the referenced data is assembled in sequence according to the chronological order for each type of subject matter, irrespective of whether this is the chronological order at which the reference points are provided in the data stream.

12. A television system according to claim 1 **characterised in that** the one or more reference points are added to the data stream following the recording of a live event, thereby retrospectively referencing previously recorded material.

13. A television system according to claim 1 **characterised in that** the one or more reference points are added to the data stream by the broadcaster prior to transmission of the data to the BDR (4).

14. A television system according to claim 1 **characterised in that** the one or more reference points relating to a particular data stream are transmitted to the BDR (4) at a time after the transmission of the particular data stream.

15. A television system according to claim 14 **characterised in** the reference points relating to the data stream are stored in indexing means in the BDR (4) and, on selection of a reference option by the user, the reference points are matched with the stored data stream and the referenced data in the data stream is assembled in sequence for display on said display screen (6) and/or for listening via speakers.

16. A television system according to claim 1 **characterised in that** the one or more reference points are added to a data stream by a user using control means when the data is being displayed one the display screen (6) or is being listened to via the speakers.

17. A television system according to claim 1 **characterised in that** the user is able to select to watch an assembled sequence of referenced data by selection of a pre-designated reference button (8) on control means and/or selection of a reference option (12) on an options menu (14) which is displayable on the display screen (6).

18. A television system according to claim 16 or 17 **characterised in that** the control means is a remote control handset (10).

19. A television system according to claim 1 **characterised in that** the memory means is a hard disk drive forming part of or connected to the BDR (4).

20. A method of referencing portions of data in one or more television programmes using a television system (2), said television system (2) including a BDR (4) for receiving data transmitted from a broadcaster at a remote location via cable, satellite and/or terrestrial means, said data relating to one or more television programmes and/or channels, said BDR (4) decoding and processing said data to provide video, audio and/or auxiliary data for display on a display screen, listening via speakers and/or for storage in memory means for subsequent display/listening at some time in the future, and wherein said method includes the steps of said broadcaster and/or user reviewing one or more television programmes and including reference points at one or more points in said programme(s), said one or more reference points being stored in memory means of said BDR (4) and, on subsequent user selection of a reference option, the reference points in said programme(s) are assembled in sequence and displayed on said display screen (6) and/or for listening via said speakers.
